# EUROPÄISCHE PATENTSCHRIFT

(11) **EP 2 911 903 B1**
(45) Veröffentlichungstag und Bekanntmachung des Hinweises auf die Patenterteilung: **14.06.2017**
(21) Anmeldenummer: 13771125.5
(22) Anmeldetag: 30.09.2013
(51) Int. Cl.: B60K 6/48, B60K 6/547, F16F 15/10, F16F 15/14

(54) **HYBRIDANORDNUNG**
HYBRID ASSEMBLY
AGENCEMENT HYBRIDE

(30) Priorität: 29.10.2012 DE 102012219728
(43) Veröffentlichungstag der Anmeldung: 02.09.2015
(73) Patentinhaber: ZF Friedrichshafen AG, 88046 Friedrichshafen (DE)
(72) Erfinder: DÖGEL, Thomas, 97720 Nüdlingen (DE); KÜHNER, Michael, 74078 Heilbronn (DE); RATTE, Andreas, 97456 Dittelbrunn (DE)
(86) Internationale Anmeldenummer: PCT/EP2013/070304
(87) Internationale Veröffentlichungsnummer: WO 2014/067726

(56) Entgegenhaltungen:
- WO-A1-2012/066644
- DE-A1-102009 024 530
- DE-A1-102011 007 118
- DE-A1-102011 101 977
- DE-U1- 9 414 314

## Beschreibung

Die vorliegende Erfindung bezieht sich auf eine Hybridanordnung für einen Antriebsstrang eines Kraftfahrzeugs mit einem Verbrennungsmotor, enthaltend ein Hybridantriebsmodul zum Übertragen eines Drehmoments, gemäß dem Oberbegriff von Patentanspruch 1.

Bei einem Verbrennungsmotor kann im Allgemeinen kein konstantes Drehmoment in einen diesen umfassenden Antriebsstrang eingeleitet werden, was häufig dadurch bedingt ist, dass in dem Verbrennungsmotor periodisch Zündungen auftreten, und die dabei freigesetzte Energie in eine Drehbewegung der Kurbelwelle umgesetzt wird. Sowohl das von der Kurbelwelle abgegebene Drehmoment, als auch deren Drehzahl unterliegen so Schwankungen bzw. Schwingungen, die allgemein als Drehungleichförmigkeiten bezeichnet werden. Derartige Drehungleichförmigkeiten können im Fahrbetrieb spürbar sein. Daher besteht allgemein die Zielsetzung, diese so weit als möglich zu reduzieren bzw. zu eliminieren.

Konventionell werden durch den Einsatz von Kraft- bzw. Energiespeichern, also beispielsweise Federn und entsprechend bewegbarer Massen, die bei derartigen Drehungleichförmigkeiten auftretenden Energien vorübergehend gespeichert, um dann so in den Antriebsstrang weitergegeben zu werden, um einen geglätteter Drehzahl- bzw. Drehmomentverlauf zu erreichen. Ebenso werden bei als drehzahladaptiven Tilgern bekannten Massenpendeln die im Fahrzustand auftretenden Drehungleichförmigkeiten in oszillierende Auslenkungen von Schwingungsmassen umgesetzt, wobei die Auslenkung entgegen der Fliehkraft erfolgt und durch Vorgabe der Auslenkungsbahn bzw. auch der auszulenkenden Massen eine Abstimmung auf Anregungsdrehzahlen bzw. Anregungsfrequenzen erreicht werden kann.

Aufgrund der im modernen Fahrzeugbau immer beengter werdenden Platzverhältnisse steht auch für die zur Schwingungsdämpfung eingesetzten Systeme weniger Bauraum zur Verfügung. Entsprechende Einbußen in der Entkopplungsgüte, also der Verringerung der auftretenden Drehungleichförmigkeiten, können daher auftreten.

Die WO 2012/066644A1 offenbart einen Torsionsdämpfer, dessen Sekundärseite über ein Planetengetriebe mit einer Zusatzmasse gekoppelt ist, wobei dieser jedoch nicht nach dem Leistungsverzweigungsprinzip arbeitet. Die Zusatzmasse steht gleichzeitig in Wirkungsverbindung mit dem Rotor einer Elektromaschine und kann durch diesen beeinflusst werden.

Mit der DE 10 2011 101 977 A1 ist ein Drehschwingungsdämpfer mit zwei um eine Drehachse aufeinander gelagerten und um diese entgegen der Wirkung einer Federeinrichtung gegeneinander begrenzt verdrehbaren Schwungmassen bekannt geworden. Zur Verbesserung des Schwingungsentkopplungsverhaltens eines insbesondere im Antriebsstrang eines Kraftfahrzeugs angeordneten Drehschwingungsdämpfers ist ein zur Drehachse zentrisch gelagertes, ringförmiges Massependel vorgesehen, das bei einer Verdrehung der beiden Schwungmassen gegeneinander von einer der beiden Schwungmassen über einen begrenzten Verdrehwinkel drehangetrieben ist.

Die deutsche Gebrauchsmusterschrift DE-G 94 14 314.5 beschreibt einen Torsionsschwingungsdämpfer für Kupplungen von Kraftfahrzeugen, mit einem antriebsseitigen Übertragungselement, mit zumindest einem relativ zu demselben drehbaren Planetenträger, der mit wenigstens einem Planetenrad versehen ist, das einerseits mit einem Sonnenrad und andererseits mit einem Hohlrad in Eingriff steht und mit einem abtriebsseitigen Übertragungselement, wobei eines der Übertragungselemente Ansteuermittel für eine Federeinrichtung aufweist. Dabei ist sowohl dem antriebsseitigen Übertragungselement als auch dem abtriebsseitigen Übertragungselement jeweils eine Schwungmasse zugeordnet, von denen zumindest eine über die Federeinrichtung mit wenigstens einem als Zwischenmasse wirksamen Element des Planetengetriebes verbunden ist, wobei die Zwischenmasse für eine von Drehzahl und Drehrichtung der beiden Schwungmassen zueinander abhängige Bewegung antreibbar ist.

Aus der DE 10 2009 024 530 A1 geht ein Antriebssystem für Hybridfahrzeuge hervor, welches einen Torsionsschwinger mit einem auf der Primär- oder der Sekundärseite angeordneten drehzahladaptiven Tilger aufweist.

Weiter beschreibt die DE 10 2011 075 240 A1 ein Hybridantriebsmodul mit einer elektrischen Antriebskomponente und einem Torsionsschwingungsdämpfer in Form eines Feder-Massen-Speichers, der nach dem Leistungsverzweigungsprinzip arbeitet. Die Grundidee der Leistungsverzweigung basiert darauf, das durch den Verbrennungsmotor bereitgestellte Drehmoment auf zwei Leistungszweige aufzuteilen, diese zueinander hinsichtlich ihrer jeweiligen Phasenlage zueinander zu verschieben und anschließend beide Leistungszweige zu überlagern, um eine Reduzierung der Drehungleichförmigkeiten in dem zu übertragenden Drehmoment zu erreichen.

Solche Systeme weisen durch die große Anzahl von Komponenten und das komplexe Zusammenspiel der einzelnen Komponenten eine hohe technische Komplexität auf. So trifft in diesem technischen Gebiet eine Vielzahl von sich zum Teil entgegenstehenden Zielen aufeinander. Um möglichst Effizienz- und/oder Emissionsvorteile erzielen zu können, kann es daher ratsam sein, dieses komplexe Zusammenspiel auch in unterschiedlichen Betriebszuständen aufeinander abzustimmen. Eine gattungsgemäße Hybridanordnung ist bereits aus der DE 10 2011 007 118 A1 bekannt. Gemäß den dort beschriebenen Ausführungsbeispielen können jeweils einzelne Komponenten, insbesondere ein Torsionsschwingungsdämpfer, ein Überlagerungsgetriebe oder eine Trennkupplung mit einem separaten Gehäuse ausgeführt und fluiddicht gekapselt werden.

Es besteht ein Bedarf daran, einen Kompromiss zwischen einer Verringerung von in einem Antriebsstrang vorliegenden Drehungleichförmigkeiten, einer Verringerung eines Kraftstoffverbrauchs eines Kraftfahrzeugs mit dem Antriebsstrang, seiner Emissionen, seines Gewichts und des für den Antriebsstrang zur Verfügung stehenden Bauraums zu verbessern.

Diesem Bedarf trägt eine Hybridanordnung gemäß dem Oberbegriff von Patentanspruch 1 Rechnung, bei dem das Getriebegehäuse einen Nassraum umfasst, wobei der Torsionsschwingungsdämpfer, das Überlagerungsgetriebe, die Trennkupplung und die elektrische Antriebskomponente in dem Nassraum aufgenommen sind.

Vorteilhafte Ausgestaltungen und Weiterbildungen sind in den abhängigen Patentansprüchen aufgeführt.

So kann optional bei einem Hybridantriebsmodul gemäß einem Ausführungsbeispiel das Überlagerungsgetriebe im Drehmomentfluss vor der Trennkupplung angeordnet sein. Hierdurch kann es möglich sein, auch das Überlagerungsgetriebe durch die Trennkupplung abzukoppeln um so eine weitere Reduzierung der Massen bzw. Trägheitsmomente zu ermöglichen. Anders ausgedrückt kann so gegebenenfalls ein Aufbau eines mit der Trennkupplung kombinierten Torsionsschwingungsdämpfers vereinfacht werden, wodurch die Drehungleichförmigkeiten an der Kurbelwelle des Verbrennungsmotors unmittelbarer ausgeglichen bzw. geglättet werden können. Das an die Trennkupplung geleitete Drehmoment kann somit geringere Drehungleichförmigkeiten aufweisen. Ergänzend oder alternativ kann hierdurch auch eine Geräuschreduzierung und damit gegebenenfalls eine Erhöhung des Fahrkomforts erzielbar sein, da durch die Trennkupplung im Falle eines ausschließlichen Antriebs durch die elektromotorische Komponente eine Bewegung des Überlagerungsgetriebes unterbunden wird.

Optional kann ein Hybridantriebsmodul gemäß einem Ausführungsbeispiel ferner einen weiteren Torsionsschwingungsdämpfer umfassen, welcher im Drehmomentfluss zwischen der Trennkupplung und der Ausgangsseite angeordnet ist. Durch das Bereitstellen des weiteren Torsionsschwingungsdämpfers kann gegebenenfalls das Schwingungsdämpfungsverhalten des Hybridantriebsmoduls im Drehmomentübertragungsweg zwischen der Eingangsseite und der Ausgangsseite weiterhin verbessert werden.

Optional kann bei dem Hybridantriebsmodul gemäß einem Ausführungsbeispiel das Getriebe ein automatisiertes Stufengetriebe sein. Der Einsatz eines automatisierten Stufengetriebes kann so mit konstruktiv einfachen Mitteln eine Unterbrechung des Drehmomentflusses in dem Getriebe zu den dem Getriebe folgenden Komponenten ermöglichen. Ergänzend oder alternativ können hierdurch gegebenenfalls auch Wandlerverluste reduziert werden.

So kann optional bei dem Hybridantriebsmodul gemäß einem Ausführungsbeispiel das automatisierte Stufengetriebe wenigstens ein Kopplungselement umfassen, das derart ausgebildet ist, dass durch ein Betätigen oder ein Lösen des Kopplungselements ein Drehmomentfluss durch das automatisierte Stufengetriebe wenigstens teilweise oder vollständig unterbrochen werden kann. Das Kopplungselement kann beispielsweise eine Lamellenkupplung, eine Bremse, eine Bandbremse oder ein anderes entsprechendes Maschinenteil umfassen. Hierdurch kann es somit möglich sein, die beschriebene Unterbrechung des Drehmomentflusses in dem Getriebe mit einfachen konstruktiven Mitteln, die gegebenenfalls bereits implementiert sind, zu bewirken.

Optional kann das Hybridantriebsmodul gemäß einem Ausführungsbeispiel ein Steuergerät umfassen, das ausgebildet ist, um die Trennkupplung bei einem Leerlaufbetrieb des Verbrennungsmotors in einen geschlossenen Zustand zu bringen, sodass der Drehmomentfluss von dem Verbrennungsmotor über die Trennkupplung nicht unterbrochen ist. Hierdurch kann es möglich sein, eine auch im Leerlaufbetrieb von dem Verbrennungsmotor angetriebene Masse zu erhöhen, wodurch gegebenenfalls eine Reduzierung der Leerlaufdrehzahl und damit eine Verbrauchsreduzierung erzielbar sein kann. Ist eine Unterbrechung des Drehmomentflusses möglich, wie dies zuvor beschrieben wurde, kann so beispielsweise auch beim Stillstand des Fahrzeugs die Reduzierung des Kraftstoffverbrauchs gegebenenfalls erzielt werden. Anders ausgedrückt kann durch die Ansteuerung der Trennkupplung, derart dass diese bereits ab Leerlaufbetrieb des Verbrennungsmotors geschlossen wird, gegebenenfalls eine Verbrauchseinsparung im Fahrbetrieb erreicht werden. Wenn die Trennkupplung geschlossen ist, ist die mit der Trennkupplung in Verbindung stehende elektrische Antriebskomponente als Schwungmasse für den Verbrennungsmotor nutzbar.

In der folgenden Beschreibung werden die Begriffe kraftschlüssige Verbindung, formschlüssige Verbindung und stoffschlüssige Verbindung verwendet. Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus. Ein reibschlüssiger Kontakt liegt hierbei dann vor, wenn zwei Objekte, also beispielsweise das betreffende Aufnahmeelement und die Gleitfläche miteinander reibschlüssig in Kontakt treten, sodass zwischen diesen eine Kraft im Falle einer Relativbewegung senkrecht zu einer Berührfläche zwischen diesen entsteht. Hierbei kann ein Drehzahlunterschied, also beispielsweise ein Schlupf, bestehen. Neben einem solchen reibschlüssigen Kontakt umfasst ein reibschlüssiger Kontakt jedoch auch eine reibschlüssige bzw. kraftschlüssige Verbindung zwischen den betreffenden Objekten, bei denen ein entsprechender Drehzahlunterschied bzw. Schlupf im Wesentlichen nicht auftritt.

Unter einer einstückig ausgebildeten Komponente wird eine solche verstanden, die genau aus einem zusammenhängenden Materialstück gefertigt ist. Der Begriff "einstückig" kann daher synonym mit den Begriffen "integral" oder "einteilig" verwendet werden.

Nachfolgend werden unter Bezugnahme auf die beigefügten Figuren Ausführungsbeispiele näher beschrieben und erläutert.
- Fig. 1: zeigt in prinzipartiger Darstellung ein Teillängsschnitt eines Antriebsstrangs gemäß einem Ausführungsbeispiel mit einem Hybridantriebsmodul gemäß einem Ausführungsbeispiel;
- Fig. 2: zeigt eine Teillängsschnittdarstellung eines dem Aufbauprinzip der Fig. 1 entsprechenden Antriebsstrangs gemäß einem Ausführungsbeispiel;
- Fig. 3: zeigt in prinzipartiger Darstellung ein Teillängsschnitt eines Antriebsstrangs gemäß einem Ausführungsbeispiel mit einem Hybridantriebsmodul gemäß einem Ausführungsbeispiel;
- Fig. 4: zeigt in prinzipartiger Darstellung ein Teillängsschnitt eines weiteren Antriebsstrangs gemäß einem nicht von der Erfindung erfassten Ausführungsbeispiel mit einem Hybridantriebsmodul gemäß einem Ausführungsbeispiel;
- Fig. 5: zeigt eine Teillängsschnittdarstellung eines Antriebsstrangs gemäß einem nicht zur Erfindung zugehörigen Ausführungsbeispiel; und
- Fig. 6: zeigt eine Teillängsschnittdarstellung eines zur Fig. 4 alternativen Aufbaus eines Antriebsstrangs gemäß einem Ausführungsbeispiel mit einem Hybridantriebsmodul gemäß einem nicht von der Erfindung erfassten Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

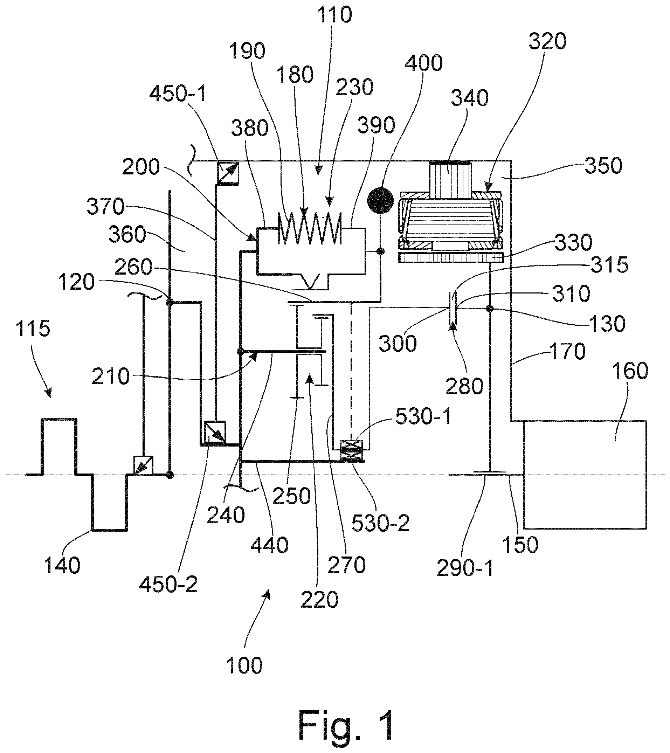

Fig. 1 zeigt einen prinzipiellen Aufbau eines Antriebsstrangs 100 gemäß einem Ausführungsbeispiel mit einem Hybridantriebsmodul 110 gemäß einem Ausführungsbeispiel in einem Längsschnitt. Über das Hybridantriebsmodul 110 wird ein von einem in Fig. 1 nur schematisch dargestellten Verbrennungsmotor 115 bereitgestelltes Drehmoment von einer Eingangsseite 120 zu einer Ausgangsseite 130 übertragen. Die Eingangsseite 120 ist hierbei mit einer Kurbelwelle 140 des Verbrennungsmotors 115 gekoppelt. Die Ausgangsseite 130 ist mit einer Eingangswelle 150 eines Getriebes 160 gekoppelt. Die Ausgangsseite 130 kann so beispielsweise als Abtriebsnabe ausgeführt sein, die mit einer entsprechenden Verzahnung der Getriebeeingangswelle 150 in Eingriff steht.

Das Hybridantriebsmodul 110 umfasst einen drehfest mit der Eingangsseite 120 angebundenen Torsionsschwingungsdämpfer 180. Ausgehend von der Kurbelwelle 140 wird das Drehmoment in den Torsionsschwingungsdämpfer 180 eingeleitet. Der Torsionsschwingungsdämpfer arbeitet hierbei wenigstens teilweise nach dem Prinzip der Leistungsverzweigung. Dies bedeutet, dass das von der Eingangsseite 120 aufgenommene Drehmoment über einen ersten Drehmomentübertragungsweg 200 und einen zu dem ersten Drehmomentübertragungsweg 200 parallelen zweiten Drehmomentübertragungsweg 210 an ein Überlagerungsgetriebe 220 weitergeleitet wird.

Der Torsionsschwingungsdämpfer 180 umfasst in dem ersten Drehmomentübertragungsweg 200 eine Phasenschieberanordnung 230 zum Erzeugen einer Phasenverschiebung einer über den ersten Drehmomentübertragungsweg 200 geleiteten Drehmomentungleichförmigkeit eines ersten Drehmomentanteils bezüglich einer über den zweiten Drehmomentübertragungsweg 210 geleiteten Drehmomentungleichförmigkeit eines zweiten Drehmomentanteils. Durch den Einsatz der Phasenschieberanordnung 230 wird dafür gesorgt, dass zunächst durch das Aufteilen und dann wieder Zusammenführen des übertragenen Drehmoments durch die dabei eingeführte Phasenverschiebung eine wenigstens teilweise destruktive Überlagerung von Schwingungsanteilen in dem zu übertragenen Drehmoment auftritt. So kann in einem idealisierten Fall gegebenenfalls sogar zumindest in einem besonders kritischen Frequenzbereich eine nahezu vollständige Eliminierung der Drehungleichförmigkeiten stattfinden. Bei realen Implementierungen wird eine solche vollständige Auslöschung nur in seltenen Betriebszuständen, wenn überhaupt, realisierbar sein.

Bei dem hier gezeigten Ausführungsbeispiel wird das über das Hybridantriebsmodul 110 übertragene Drehmoment auf die beiden vorgenannten Drehmomentanteile aufgeteilt, wobei das Verhältnis der beiden Drehmomentanteile zueinander gegebenenfalls von Betriebsparametern des Antriebsstrangs 100, wie etwa einer Drehzahl der Eingangsseite 120, abhängen kann. Insbesondere kann so die Aufteilung der Drehmomentanteile gegebenenfalls variabel, gegebenenfalls aber auch konstant sein.

Der Torsionsschwingungsdämpfer umfasst eine Primärseite 380 (z. B. ein Ansteuerungsblech) und eine gegen die Wirkung eines Federspeichers 190 bezüglich der Primärseite 380 drehbare Sekundärseite 390 (z. B. ein Absteuerungsblech). Um das Dämpfungsverhalten des Torsionsschwingungsdämpfers 180 weiter beeinflussen zu können, kann beispielsweise der Sekundärseite 390 eine Zusatzmasse 400 zugeordnet bzw. mit diesem drehfest verbunden sein. Dadurch wird die sekundärseitige Masse erhöht, wodurch Einfluss auf die Resonanzfrequenz genommen werden kann. Die Zusatzmasse 400 kann auch entfallen, wenn beispielsweise die Massenträgheit des Absteuerungsblechs 390 des Torsionsschwingungsdämpfers 180 für die Funktion der Phasendrehung ausreichend hoch dimensioniert ist.

Alternativ kann an der Sekundärseite 390 auch ein nicht gezeigter drehzahladaptiver Tilger oder Festfrequenztilger vorgesehen sein. Dieser kann dazu dienen, die an der Sekundärseite 390 ankommenden Schwingungen vor dem Überlagerungsgetriebe 220 weiter zu reduzieren. Alternativ bzw. parallel dazu können auch reibungsreduzierende Maßnahmen innerhalb des Torsionsschwingungsdämpfers eingesetzt werden.

Das Überlagerungsgetriebe 220 ist dazu ausgebildet, die über die zwei Drehmomentübertragungswege 200, 210 geleiteten Drehmomentanteile zu überlagern, um die Drehungleichförmigkeiten in dem zu übertragenden Drehmoment zu eliminieren, zumindest jedoch zu reduzieren. Hierzu ist das Überlagerungsgetriebe 220 als Planetengetriebeanordnung ausgebildet und umfasst einen an den zweiten Drehmomentübertragungsweg 210 angekoppelten Planetenradträger 240. Der Planetenradträger 240 ist beliebig drehfest mit der Eingangsseite 120 und/oder einer anderen motorseitigen Komponente verbunden und trägt mehrere in Umfangsrichtung angeordnete Planetenräder 250. Das Überlagerungsgetriebe 220 umfasst ferner ein Eingangshohlrad 260 und ein Ausgangshohlrad 270. Die Planetenräder 250 sind hierbei als gestufte Planetenräder 250 ausgestaltet, die sowohl mit dem Eingangsholrad 260 wie auch dem Ausgangsholrad 270 in Eingriff stehen. Bei dem hier gezeigten Ausführungsbeispiel sind die Planetenräder 250 sowie das Eingangshohlrad 260 und das Ausgangshohlrad 270 so ausgestaltet, dass das Eingangsholrad 260 einen größeren Durchmesser als das Ausgangsholrad 270 aufweist.

Im Drehmomentfluss ist nach dem Überlagerungsgetriebe 220 eine Trennkupplung 280 angeordnet. Die Trennkupplung 280 dient dazu, den Drehmomentfluss zwischen der mit dem Verbrennungsmotor 115 gekoppelten Eingangsseite 120 zu der mit dem Getriebe 160 gekoppelten Ausgangsseite 130 des Hybridantriebsmoduls 110 zu unterbrechen, wobei also die Trennkupplung 280 in dem Drehmomentfluss von der Eingangsseite 120 zu der Ausgangsseite 130 hinter dem Torsionsschwingungsdämpfer 180 angeordnet ist.

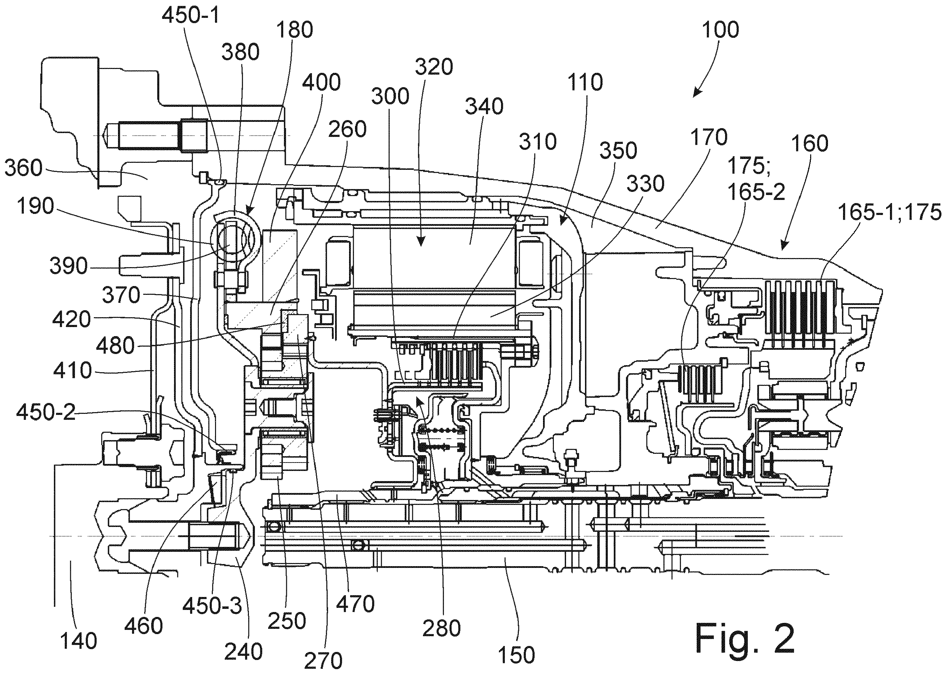

Die Trennkupplung 280 weist ein Eingangsteil 300 und ein Abtriebsteil 310 auf. Das Eingangsteil 300, das beispielsweise als Innenlamellenträger ausgestaltet sein kann, wie dies im Zusammenhang mit Fig. 2 noch gezeigt wird, ist mit dem Ausgangshohlrad 270 des Überlagerungsgetriebes 220 beliebig drehfest verbunden. An dem Abtriebsteil 310 ist ein ein- oder mehrteilig aufgebauter Rotor 330 einer elektrischen Antriebskomponente 320 angeschlossen. Dabei können Teilfunktionen des Abtriebsteils 310, wie beispielsweise Verzahnungen für das Lamellenpaket 315 in dem Rotor 330 integriert sein.

Die elektrische Antriebskomponente 320 ist bei dem hier gezeigten Ausführungsbeispiel als Elektromotor bzw. elektromotorischer Antrieb mit einem dem Rotor 330 zugeordneten Stator 340 realisiert. Bei geöffneter Trennkupplung 280 kann somit ein rein elektrischer Fahrbetrieb ermöglicht werden, indem der Fahrzeugantrieb nur über die elektrische Antriebskomponente 320 und das Getriebe 160 erfolgt. Die eigentliche Anfahrkupplung/-bremse kann sich dabei innerhalb des Getriebes 160 bzw. des Getriebegehäuses 170 befinden. Bei ausreichender Dimensionierung kann die Trennkupplung 280 auch die Funktion der Anfahrkupplung übernehmen. Die Trennkupplung 280 kann alternativ auch zwischen der Kurbelwelle 140 und dem Torsionsschwingungsdämpfer 180 bereitgestellt werden.

Bei der in Fig. 1 gezeigten Anordnung ist der Stator 340 der elektrischen Antriebskomponente 320 beliebig drehfest, beispielsweise mittels Verschraubung und Zentrierung, mit dem Getriebegehäuse 170 verbunden. Die Weiterleitung des Drehmoments von dem Rotor 330 bzw. dem Abtriebsteil 310 der Trennkupplung 280 zu der Getriebeeingangswelle 150 erfolgt beispielsweise über eine trennbare Verbindung 290-1, beispielsweise eine trennbare Steckverzahnung. Der Rotor 330 ist über die Trennkupplung 280 und das daran angebundene abtriebsseitige Ausgangshohlrad 270 an dem Planetenradträger 240 und weiterhin an der Getriebeeingangswelle 150 über Lagerstellen 530-1, 530-2 gelagert. Ein Flanschabschnitt 440 an dem Planetenradträger 240 dient als Aufnahme der Lagerstelle 530-2 für das Ausgangshohlrad 270 vorgesehen. Alternativ können beide Lagerstellen auf der Getriebeeingangswelle 150 liegen.

Die elektrische Antriebskomponente 320 wirkt stets als Direktantrieb in dem Drehmomentfluss nach der Trennkupplung 280 und ist beliebig vor oder nach dem Torsionsschwingungsdämpfer 180 angeordnet. Eine von der elektrischen Antriebskomponente 320 bereitgestellte Drehmomentkomponente wird so in den Drehmomentfluss stets hinter der Trennkupplung 280 eingeleitet. In dem in Fig. 1 dargestellten Ausführungsbeispiel ist die elektrische Antriebskomponente 320 innerhalb des Gehäuses 170 des Getriebes 160 angeordnet. Möglich sind jedoch auch andere Anordnungen. So kann beispielsweise die elektrische Antriebskomponente 320 bzw. deren Drehachse auch außerhalb des Getriebegehäuses 170, beispielsweise mit Parallelversatz gegenüber der Getriebeeingangswelle 150 angeordnet werden. Bei einer solchen Anordnung kann die Einleitungsstelle zwischen der Trennkupplung 280 und der Getriebeeingangswelle 150 gleich bleiben. Je nach konkreter Ausgestaltung kann lediglich ein zusätzliches Übertragungsglied (z. B. ein Riemen oder eine Verzahnung) zwischen der elektrischen Antriebskomponente und der Getriebeeingangswelle vorgesehen werden. Ebenso kann das Hybridantriebsmodul 110 ein eigenständiges Gehäuse aufweisen.

Bei dem in Fig. 1 dargestellten Ausführungsbeispiel sind innerhalb des Getriebegehäuses 170 ein Nassraum 350, der auch als Feuchtraum bezeichnet wird, sowie ein davon durch eine Trennwand 370 abgegrenzter Trockenraum 360 vorgesehen. Der Torsionsschwingungsdämpfer 180 befindet sich mit der Primärseite 380, der Sekundärseite 390, sowie dem dazugehörigen Federspeicher 190 bei dem hier gezeigten Ausführungsbeispiel in dem Nassraum 350. Die Eingangsseite 120 des Hybridantriebsmoduls 110, die hier als trennbare Verbindung bzw. als Verbindungsplatte mit Verschraubung zwischen Kurbelwelle 140 und Primärseite 380 des Torsionsschwingungsdämpfer 180 realisiert ist, befindet sich im Trockenraum 360.

Zum Abdichten des Nassraums 330 in dem Getriebegehäuse 170 werden statische und dynamische Dichtungen 450 zwischen der Trennwand 370 und dem Getriebegehäuse 170 eingesetzt. Die Dichtung 450-1 zwischen dem Getriebegehäuse 170 und der Trennwand 370 ist hierbei als statische Dichtung, die Dichtung 450-2 zwischen der Trennwand 370 und der Eingangsseite 120 ist als dynamische Dichtung ausgeführt. Die dynamische Dichtung 450-2 zwischen der Trennwand 370 und der Eingangsseite 120 weist eine Vorpressung an der Dichtkante auf. Dadurch können etwaige Radial- und/oder Axialbewegungen der Eingangsseite 120 gegenüber der Trennwand 370 ausgeglichen werden. In einer nicht beanspruchten alternativen Ausführung kann bei Verwendung einer trockenlaufenden Reibungskupplung als Trennkupplung 280 die Trennwand 370 entfallen, wobei dann der Torsionsschwingungsdämpfer 180 und/oder das Überlagerungsgetriebe 220 innerhalb mindestens eines separaten Nassraums angeordnet werden.

Die Ölbenetzung der Verzahnungsbereiche der Planetenräder 250, des Eingangshohlrads 260 und des Ausgangshohlrads 270 sowie des Torsionsschwingungsdämpfers 180 kann durch Verlustschmierung erfolgen, gegebenenfalls unterstützend durch hier nicht dargestellten Ölleitblechen und Öffnungen im Bereich der Getriebeeingangswelle 150.

Im Folgenden wird das Zusammenwirken der Komponenten des Antriebsstrangs 100, insbesondere die Wirkungsweise des Torsionsschwingungsdämpfers 180 unter Bezugnahme auf Fig. 2 erläutert, welche eine mögliche konstruktive Ausführung des Antriebsstrangs 100 aus Fig. 1 dargestellt.

Von der Kurbelwelle 140 wird das durch den in Fig. 2 nicht gezeigten Verbrennungsmotor 115 erzeugte Drehmoment in eine beliebig drehfest angeordnete Antriebsplatte 410 (engl. Driveplate) eingeleitet. Die Antriebsplatte 410 ist mit einer flexiblen Verbindungsplatte 420 an (engl. Flexplate) einer radialen Außenstelle beliebig drehfest verbunden. Die Antriebsplatte 410 und die flexiblen Verbindungsplatte 420 sind in dem Trockenraum 360 angeordnet. Von der flexiblen Verbindungsplatte 420 wird über eine Hirth-Verzahnung 460 ein Drehmomentanteil des Drehmoments in den Torsionsschwingungsdämpfer 180 und der andere Drehmomentanteil des Drehmoments über den Planetenradträger 240 eingeleitet. Bei diesem Ausführungsbeispiel ist der Ausgangsteil der Hirth-Verzahnung 460 einteilig mit dem Planetenradträger 240 ausgeführt. Andere konstruktive Ausführungen können beispielsweise eine formschlüssige und/oder kraftschlüssige Verbindung der beiden Komponenten miteinander ermöglichen.

Das gesamte Hybridantriebsmodul 110 befindet sich in dem Nassraum 350. Die Trennwand 370, die den Trockenraum 360 von dem Nassraum 350 trennt, ist axial zwischen der flexiblen Verbindungsplatte 420 und dem Torsionsschwingungsdämpfer 180 angeordnet. Zwischen der Trennwand 370 und dem Getriebegehäuse 170 ist eine beliebige statische Dichtung 450-1, die beispielsweise als O-Ring implementiert sein kann, vorgesehen. Die Trennwand 370 und die damit in Kontakt stehende Dichtung 450-1 werden mittels einer formschlüssigen und/oder kraftschlüssigen Verbindung, beispielsweise mittels eines Sicherungsrings oder eines Nutenrings, in ihrer axialen und/oder radialen Position gegenüber dem Getriebegehäuse 170 gehalten.

Weiterhin ist im inneren radialen Bereich eine dynamische Dichtung 450-2 zwischen der Trennwand 370 und der Hirth-Verzahnung 460 bzw. der Anbindung des Torsionsschwingungsdämpfers 180 und Planetenradträgers 240 vorgesehen. Da die Hirth-Verzahnung zum Nassraum 350 hin geöffnet ist, ist ebenso eine statische Dichtung 450-3 zwischen den beiden Verzahnungsteilen der Hirth-Verzahnung 460 implementiert. Jedoch sind auch andere konstruktive Anordnungen möglich, beispielsweise in Form eines inversen Aufbaus, bei welchen diese Dichtung entfallen kann.

Der Torsionsschwingungsdämpfer 180 wird über das Ansteuerungsblech der Primärseite 380 angesteuert. Die Absteuerung erfolgt nach dem Federspeicher 190 innerhalb des Torsionsschwingungsdämpfers 180 über das Absteuerungsblech der Sekundärseite 390, welches mittels Schweißen mit der Zusatzmasse 400 verbunden ist. Andere kraft-, form- oder stoffschlüssige Verbindungen sind jedoch auch möglich. Das Absteuerungsblech 390 und/oder die Zusatzmasse 400 können auch integral mit dem Eingangshohlrad 260 ausgebildet sein. Die Federspeicher 190 können hierbei mit dem Absteuerungsblech der Sekundärseite 390 in Anlage stehen.

Das Ausgangshohlrad 270 ist mit der Trennkupplung 280 ebenfalls mittels einer kraft-, form- und/oder stoffschlüssigen Verbindung verbunden. Dabei kann das Ausgangshohlrad 270 an dem Innenlamellenträger 300 oder an dem Außenlamellenträger 310 der Trennkupplung 280 angeschlossen sein, jedoch stets auf der Weise, dass die elektrische Antriebskomponente 320 gegenüber dem Torsionsschwingungsdämpfer 180 im Drehmomentfluss nachgelagert ist. Dadurch wird sichergestellt, dass eine von der elektrischen Antriebskomponente bereitgestellte Drehmomentkomponente in den Drehmomentfluss hinter dem Torsionsschwingungsdämpfer eingeleitet wird.

Der Rotor 330 der elektrischen Antriebskomponente 320 ist einerseits an dem Außenlamellenträger 310 der Trennkupplung 280, beispielsweise mittels einer Verschraubung befestigt, andererseits über einen Abtriebsflansch 470 mit der Getriebeeingangswelle 150 drehfest verbunden. Dabei ist der Abtriebsflansch 470 an der Getriebeeingangswelle 150 über eine Lagesicherung, z. B. einen Sicherungsring oder einen Nutenring, in axialer Richtung sowie über eine Steckverzahnung in radialer Richtung angeordnet. An dem Abtriebsflansch 470 sind der Innenlamellenträger 300 sowie das an dem Innenlamellenträger 300 angebundene Ausgangshohlrad 270 radial gelagert. Das Eingangshohlrad 260 sowie das Absteuerungsblech 390 und die Zusatzmasse 400, die mit dem Eingangshohlrad 260 in Verbindung stehen, sind axial an dem Ansteuerungsblech 380 des Torsionsschwingungsdämpfers 180 gelagert. Das Eingangshohlrad 260, die Zusatzmasse 400 und das Absteuerungsblech 390 sind gegenüber dem Ausgangshohlrad 270 axial und radial, beispielsweise unter Verwendung einer Gleitlagerung 480, gelagert.

Des Weiteren sind in Fig. 2 im Bereich des automatisierten Stufengetriebes 160 zwei Lamellenkupplungselemente 165-1, 165-2 gezeigt, die beispielsweise als Kopplungselemente 175 dazu dienen können, den Drehmomentfluss durch das automatisierte Stufengetriebe 160 wenigstens teilweise oder vollständig zu unterbrechen.

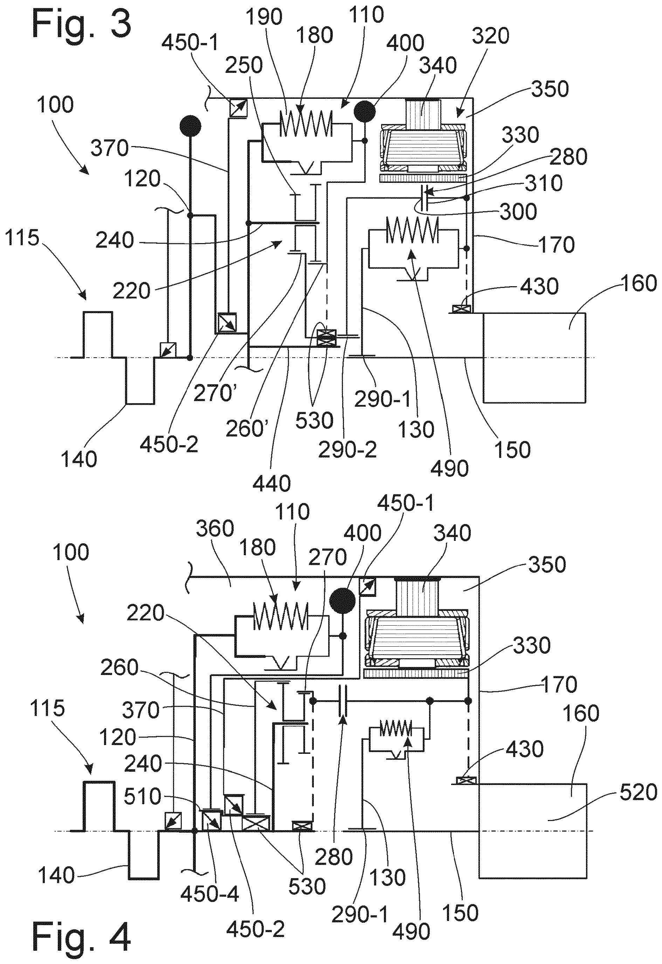

Fig. 3 zeigt einen prinzipiellen Aufbau eines Antriebsstrangs 100 mit einem Hybridantriebsmodul 110 gemäß einem weiteren Ausführungsbeispiel. Die hier gezeigte Variante unterscheidet sich von dem ersten Ausführungsbeispiel dadurch, dass Sonnenräder 260', 270' anstatt Hohlräder 260, 270 in dem Überlagerungsgetriebe 220 eingesetzt werden.

Des Weiteren ist die Trennkupplung 280 mittels einer trennbaren Verbindung 290-2, die beispielsweise als eine Steckverzahnung realisiert ist, mit dem Ausgangssonnenrad 270' drehfest verbunden.

Zusätzlich zu dem Torsionsschwingungsdämpfer 180 umfasst das Hybridantriebsmodul 110 gemäß diesem Ausführungsbeispiel einen weiteren Torsionsschwingungsdämpfer 490. Der weitere Torsionsschwingungsdämpfer 490 ist zwischen dem Rotor 330 und der Getriebeeingangswelle 150 angeordnet, und dient dazu das Schwingungsdämpfungsverhalten des Hybridantriebsmoduls im Drehmomentübertragungsweg zwischen der Eingangsseite 120 und der Ausgangsseite 130 weiterhin zu verbessern. Der weitere Torsionsschwingungsdämpfer 490 kann beispielsweise als ein Turbinen-Torsionsschwingungsdämpfer realisiert sein.

Bei dem in Fig. 3 gezeigten Ausführungsbeispiel ist der Rotor 330 nicht, wie im Falle des Ausführungsbeispiels aus Fig. 1, an der Getriebeeingangswelle 150 gelagert, sondern an dem Getriebegehäuse 170 mittels eines Lagers 430, das beispielsweise als Wälz- und/oder Gleitlager implementiert sein kann. Die radiale Lagerung der Sonnenräder 260', 270' erfolgt an einem Flanschabschnitt 440 des Planetenradträgers 240.

Das in Fig. 4 dargestellte Ausführungsbeispiel weicht von der vorliegenden Erfindung ab und unterscheidet sich von den Ausführungsbeispielen aus den Fig. 1 und 3 dadurch, dass nicht alle Komponenten des Hybridantriebsmoduls 110 in dem Nassraum 350 angeordnet sind. Während die elektrische Antriebskomponente 320, das Überlagerungsgetriebe 220, die Trennkupplung 280 sowie der zusätzliche Torsionsschwingungsdämpfer 490 weiterhin in dem Nassraum 350 angeordnet sind, befinden sich der Torsionsschwingungsdämpfer 180 zusammen mit der Zusatzmasse 400 in dem Trockenraum 360 des Getriebegehäuses 170, und sind mit dem Eingangshohlrad 260 beliebig drehfest, beispielsweise mittels einer ein- oder mehrteiligen Steckverzahnung verbunden.

Bedingt durch die Anordnung des Torsionsschwingungsdämpfers 180 in dem Trockenraum 360 des Getriebegehäuses 170, ist eine zusätzliche dynamische Dichtung 450-4 vorgesehen, die zwischen dem Planetenradträger 240 und einem Zwischensegment 510 angeordnet ist. Die Abdichtung des Nassraums 350 erfolgt somit an drei Stellen, nämlich über eine Dichtung 450-1 zwischen der Trennwand 370 und dem Getriebegehäuse 170, über eine Dichtung 450-2 zwischen der Trennwand 370 und dem Zwischensegment 510 und über die Dichtung 450-4.

Um nur eine geringe Benetzung der dem Nassraum 350 zugewandten Flächen der Dichtungen 450-1, 450-2, 450-4 und somit eine sichere Funktion der Dichtungen zu gewährleisten, weist der Nassraum 350 Öffnungen zum Getriebesumpf 520 auf einem größeren Radius gegenüber der Getriebeeingangswelle 150 als der Berührungsradius der Dichtkanten der dynamischen Dichtungen 450 auf. Durch diese Öffnungen wird das aus der Trennkupplung 280 entweichende Fluid permanent in den Getriebesumpf 520 abgeführt.

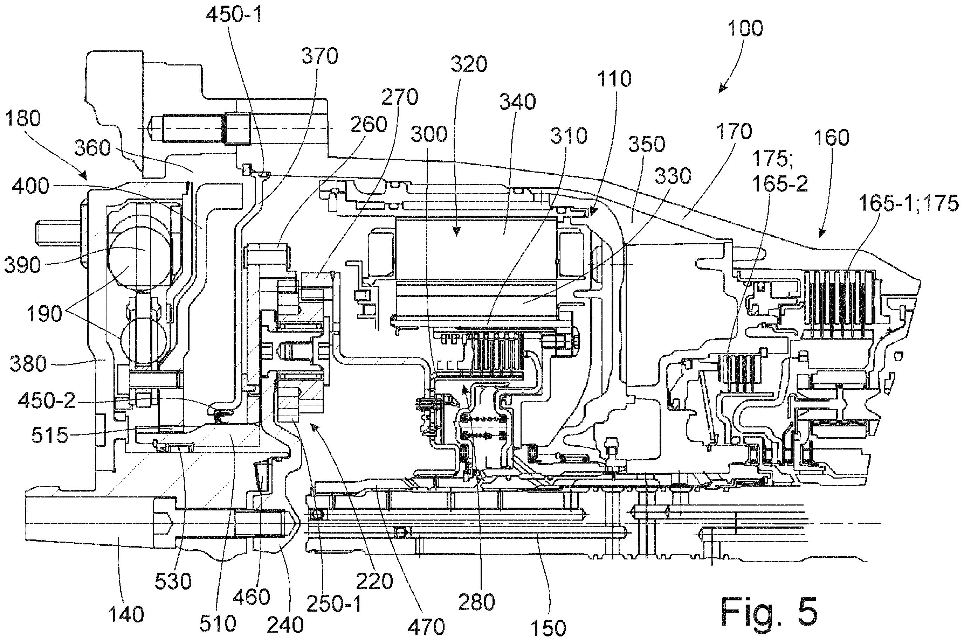

Um einen konstanten Dichtspalt an den Dichtungen 450-2 und 450-4 zu gewährleisten, ist zwischen dem Planetenradträger 240 und dem Zwischensegment 510 eine radiale Lagerstelle 530 vorgesehen, die beispielsweise auch das Eingangshohlrad 260 führt. Die Lagerstelle ist in Fig. 5 als Wälzlagerung dargestellt, jedoch kann sie auch als Gleitlagerung ausgeführt sein. Dabei sind die gemeinsame Anordnung und die axiale Lagesicherung mit der entsprechenden Dichtung 450-4 zu beachten.

Der Planetenradträger 240 kann über eine beliebig trennbare Verbindung mit der Kurbelwelle 140 verbunden sein.

Fig. 5 zeigt eine Teillängsschnittdarstellung eines Antriebsstrangs gemäß einem weiteren nicht von der vorliegenden Erfindung erfassten Ausführungsbeispiel. Im Unterschied zu der Anordnung aus Fig. 4 umfasst der Antriebsstrang nur einen Torsionsschwingungsdämpfer 180. Der Torsionsschwingungsdämpfer 180, der im Trockenraum 360 angeordnet ist, ist hier zweistufig ausgebildet und umfasst einen zweireihigen Federspeicher 190.

Die Absteuerungsbleche 390 des zweireihigen Federspeichers 190 sind mittels einer beliebigen Fügeverbindung, beispielsweise eine Verschraubung, mit der Zusatzmasse 400 verbunden. Die Zusatzmasse 400 ist über das Zwischensegment 510 mit dem Eingangshohlrad 260 der Überlagerungsgetriebe 220 verbunden. Die Verbindungsstelle 515 zwischen der Zusatzmasse 400 und dem Zwischensegment 510 ist beispielsweise als Steckverzahnung ausgeführt. Das Zwischensegment 510 und das mehrteilig ausgeführte Eingangshohlrad 260 sind ebenfalls beliebig, beispielsweise mittels einer Schweißnaht, miteinander verbunden. Jedoch sind andere Verbindungsarten möglich. Der Planetenradträger 240 ist beliebig, vorliegend mittels der Hirth-Verzahnung 460 mit der Kurbelwelle 140 und/oder dem Ansteuerungsblech 380 drehfest verbunden.

Das Zwischensegment 510 und das Eingangshohlrad 260 sind axial gegenüber der Trennwand 370 über eine Lagerstellen 530, beispielsweise eine Gleitlagerung oder eine Wälzlagerung geführt. Der Axialausgleich zwischen dem Planetenradträger 240 und dem Eingangshohlrad 260 beziehungsweise Torsionsschwingungsdämpfer 180 erfolgt in der Steckverzahnung 515 und zwischen Eingangshohlrad 260 und Planetenrad 250-1. Alternativ könnte die Lagerstelle 530 nicht wie dargestellt gegenüber der stehenden Trennwand 370 sondern gegenüber der Primärseite 380 und der Sekundärseite 390 des Torsionsschwingungsdämpfers 180 angeordnet werden.

Die Trennkupplung 280 ist einerseits mit dem Ausgangshohlrad 270 axial am Planetenradträger 240 geführt. Andererseits ist die Trennkupplung 280 radial am Abtriebsflansch 470 an der Kurbelwelle 140 geführt. Die Axiallagerung kann alternativ ebenfalls am Abtriebsflansch 470 erfolgen. Das Ausgangshohlrad 270 könnte zudem am Planetenradträger 240 oder Eingangshohlrad 260 axial und radial gelagert werden und wäre dann mittels einer trennbaren Fügeverbindung mit der Trennkupplung 280 verbindbar.

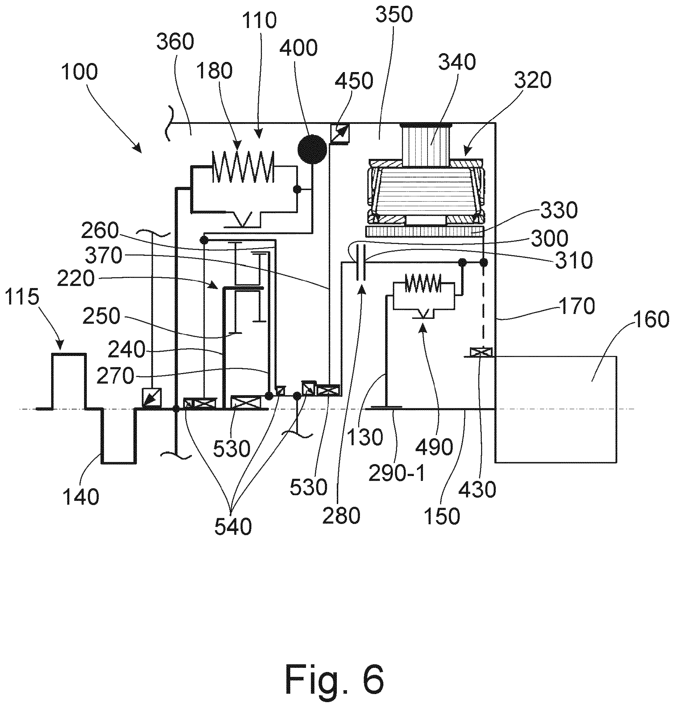

Fig. 6 zeigt eine alternative Ausführung des in Fig. 4 dargestellten und nicht unter die Erfindung fallenden Aufbauprinzips eines Antriebsstrangs 100 mit einem Hybridantriebsmodul 110, wobei die Anordnung der Komponenten des Hybridantriebsmoduls 100 im Nassraum 350 und im Trockenraum 360 von der Anordnung aus Fig. 4 verschieden ist.

Zusätzlich zu dem Torsionsschwingungsdämpfer 180 ist auch das Überlagerungsgetriebe 220 innerhalb des Trockenraums 360 des Getriebegehäuses 170 zwischen Verbrennungsmotor 115 und Trennwand 370 angeordnet.

Der Torsionsschwingungsdämpfer 180 kann in Gestalt eines Zweimassenschwungrads (ZMS) realisiert sein. Ebenso kann ein Gleitschalen-Torsionsschwingungsdämpfer und/oder ein Naben-Deckblech-Torsionsschwingungsdämpfer mit Kupplungsscheibe verwendet werden.

Das Überlagerungsgetriebe 220 ist gegenüber dem Trockenraum 360 durch ein mehrteiliges Dichtungssystem 540 abgedichtet, welches sowohl statische wie auch dynamische Dichtungen umfasst.

Die in den Figuren beschriebenen Ausführungsbeispiele beziehen sich auf ein Fahrzeug mit einem längseingebauten Antriebsstrang 100 und Heckantrieb. Die Antriebsstränge 100 gemäß einem Ausführungsbeispiel, wie sie in diesen Figuren gezeigt sind, weisen so eine eher axial länger bauende Anordnung auf. Andere Einbaukonzepte, wie beispielsweise ein Quereinbau des Antriebsstrangs 100 mit Frontantrieb, sind jedoch ebenso möglich. Im letzteren Fall kann ein solcher Antriebsstrang 100 gemäß einem Ausführungsbeispiel gegebenenfalls einen Parallelversatz bezüglich der Getriebeeingangswelle 150 des Getriebes 160 zu der Ausgangsseite 130 des Hybridantriebsmoduls 110 bzw. der elektrischen Antriebskomponente 320 aufweisen.

Die Trennkupplung 280 der vorliegend beschriebenen Ausführungsbeispiele dient in der ersten Linie dazu, den Drehmomentfluss von dem Verbrennungsmotor 115 zu dem Getriebe 160 zu unterbrechen. Die Anfahrkupplung kann sich innerhalb des Getriebes 160 bzw. Getriebegehäuses 170 befinden. Bei einer ausreichenden Dimensionierung der Trennkupplung kann Letztere auch als Anfahrelement eingesetzt werden. Möglich sind auch Ausgestaltungen, bei denen die Anfahrfunktion simultan von der Trennkupplung und das Getriebe übernommen wird.

Durch den Einsatz eines Hybridmoduls 110 und/oder eine Antriebsstrangs 100 gemäß einem Ausführungsbeispiel kann gegebenenfalls ein Kompromiss zwischen einer Verringerung von in dem Antriebsstrang 100 vorliegenden Drehungleichförmigkeiten, einer Verringerung eines Kraftstoffverbrauchs eines Kraftfahrzeugs mit dem Antriebsstrang 100, seiner Emissionen, seines Gewichts und des für den Antriebsstrang 100 zur Verfügung stehenden Bauraums verbessert werden.

Bei einem Ausführungsbeispiel können so gegebenenfalls durch das Bereitstellen des mit der Eingangsseite 120 gekoppelten Torsionsschwingungsdämpfers 180, der wenigstens teilweise nach dem Leistungsverzweigungsprinzip arbeitet, die in dem in die Eingangsseite 120 eingeleiteten Drehmoment vorhandenen Drehungleichförmigkeiten durch eine kompakte Anordnung reduziert werden. Darüber hinaus kann durch die elektrische Antriebskomponente 320 ein von dem in die Eingangsseite 120 eingeleiteten Drehmoment unabhängige Drehbewegung an die Ausgangsseite 130 weitergeleitet werden. Aufgrund der beschriebenen Anordnung kann hierbei nicht nur die Eingangsseite 120, sondern ebenso der Torsionsschwingungsdämpfer 180 durch die Trennkupplung 280 abgekoppelt werden. Als Folge hiervon können so Trägheitsmomente, Massen und/oder Schleppmomente und somit gegebenenfalls ein Energieverbrauch reduziert und/oder der Fahrkomfort bei Betrieb der elektrischen Antriebskomponente 320 erhöht werden. Ergänzend oder alternativ kann gegebenenfalls auch eine verbesserte Entkopplung zwischen Kurbelwelle 140 und Getriebe 160 durch die Anordnung der Trennkupplung 280 zwischen dem Torsionsschwingungsdämpfer 180 und der Ausgangsseite 130 erreicht werden, wodurch gegebenenfalls auch der Fahrkomfort, beispielsweise der akustische Komfort im Fahrzeug weiterhin verbessert werden kann.

## Patentansprüche

1. Hybridanordnung für einen Antriebsstrang eines Kraftfahrzeugs mit einem Verbrennungsmotor, enthaltend ein Hybridantriebsmodul (110) zum Übertragen eines Drehmoments von einer Eingangsseite (120) zu einer Ausgangsseite (130), das Hybridantriebsmodul (110) mit:
einem Torsionsschwingungsdämpfer (180), der mit der Eingangsseite (120) gekoppelt ist und nach dem Leistungsverzweigungsprinzip arbeitet, was bedeutet, dass das von der Eingangsseite (120) aufgenommene Drehmoment über einen ersten Drehmomentübertragungsweg (200) und einen zu dem ersten Drehmomentübertragungsweg (200) parallelen zweiten Drehmomentübertragungsweg (210) an ein Überlagerungsgetriebe (220) weiterleitet, wobei der Torsionsschwingungsdämpfer (180) in dem ersten Drehmomentübertragungsweg (200) eine Phasenschieberanordnung (230) zum Erzeugen einer Phasenverschiebung einer über den ersten Drehmomentübertragungsweg (200) geleiteten Drehmomentungleichförmigkeit eines ersten Drehmomentanteils bezüglich einer über den zweiten Drehmomentübertragungsweg (210) geleiteten Drehmomentungleichförmigkeit eines zweiten Drehmomentanteils umfasst, und wobei das Überlagerungsgetriebe (220) dazu ausgebildet ist, die über die zwei Drehmomentübertragungswege geleiteten Drehmomentanteile zu überlagern und weiter mit
einer Trennkupplung (280), die mit dem Torsionsschwingungsdämpfer (180) und der Ausgangsseite (130) gekoppelt und ausgebildet ist, um einen Drehmomentfluss von der Eingangsseite (120) zu der Ausgangsseite (130) zu unterbrechen; wobei
das Hybridantriebsmodul (110) mit dessen Ausgangsseite (130) mit einer Eingangswelle (150) eines Getriebes (160) gekoppelt ist, welches ein Getriebegehäuse (170) umfasst, und wobei
das Hybridantriebsmodul (110) eine innerhalb des Getriebegehäuses (170) angeordnete elektrische Antriebskomponente (320) mit einem Stator (340) und mit einem Rotor (330) umfasst, der mit der Ausgangsseite (130) gekoppelt und derart angeordnet ist, um eine von der elektrischen Antriebskomponente (320) bereitgestellte Drehmomentkomponente in den Drehmomentfluss hinter der Trennkupplung (280) einzuleiten,
**dadurch gekennzeichnet, dass** das Getriebegehäuse (170) einen Nassraum (350) umfasst, wobei der Torsionsschwingungsdämpfer (180), das Überlagerungsgetriebe (220), die Trennkupplung (280) und die elektrische Antriebskomponente (320) in dem Nassraum (350) aufgenommen sind.

2. Hybridanordnung nach Anspruch 1, wobei das Getriebegehäuse (170) einen vom dem Nassraum (350) durch eine Trennwand (370) abgegrenzten Trockenraum (360) aufweist.

3. Hybridanordnung nach Anspruch 1 oder 2, wobei das Überlagerungsgetriebe (220) im Drehmomentfluss vor der Trennkupplung (280) angeordnet ist.

4. Hybridanordnung nach einem der vorhergehenden Ansprüche, das ferner einen weiteren Torsionsschwingungsdämpfer (490) umfasst, welcher im Drehmomentfluss zwischen der Trennkupplung (280) und der Ausgangsseite (130) angeordnet ist.

5. Hybridanordnung nach einem der Ansprüche 1 - 4, wobei das Getriebe (160) ein automatisiertes Stufengetriebe ist.

6. Hybridanordnung nach Anspruch 5, wobei das automatisierte Stufengetriebe wenigstens ein Kopplungselement (175) umfasst, das derart ausgebildet ist, dass durch ein Betätigen oder ein Lösen des Kopplungselements (175) ein Drehmomentfluss durch das automatisierte Stufengetriebe wenigstens teilweise oder vollständig unterbrochen werden kann.

7. Hybridanordnung nach einem der Ansprüche 1 bis 6, welches ferner ein Steuergerät umfasst, das ausgebildet ist, um die Trennkupplung (280) bei einem Leerlaufbetrieb eines mit der Eingangsseite (120) gekoppelten Verbrennungsmotors (115) in einen geschlossenen Zustand zu bringen, sodass der Drehmomentfluss von dem Verbrennungsmotor (115) über die Trennkupplung (280) nicht unterbrochen ist.

## Claims

1. Hybrid arrangement for a drive train of a motor vehicle having an internal combustion engine, comprising a hybrid drive module (110) for transmitting a torque from an input side (120) to an output side (130), the hybrid drive module (110) having:
a torsional vibration damper (180) which is coupled to the input side (120) and operates according to the power split principle, which means that the torque which is received by the input side (120) is forwarded to a superimposing transmission (220) via a first torque transmission path (200) and a second torque transmission path (210) which is parallel to the first torque transmission path (200), the torsional vibration damper (180) comprising, in the first torque transmission path (200), a phase shifter arrangement (230) for producing a phase shift of a torque irregularity of a first torque proportion, which torque irregularity is conducted via the first torque transmission path (200), with regard to a torque irregularity of a second torque proportion, which torque irregularity is conducted via the second torque transmission path (210), and the superimposing transmission (220) being configured to superimpose the torque proportions which are conducted via the two torque transmission paths, and having, furthermore,
a separating clutch (280) which is coupled to the torsional vibration damper (180) and the output side (130), and is configured to interrupt a flow of torque from the input side (120) to the output side (130);
the hybrid drive module (110) being coupled by way of its output side (130) to an input shaft (150) of a transmission (160) which comprises a transmission housing (170), and
the hybrid drive module (110) comprising an electric drive component (320) which is arranged within the transmission housing (170) having a stator (340) and
having a rotor (330) which is coupled to the output side (130) and is arranged so as to introduce a torque component which is provided by the electric drive component (320) into the flow of torque downstream of the separating clutch (280),
**characterized in that** the transmission housing (170) comprises a wet space (350), the torsional vibration damper (180), the superimposing transmission (220), the separating clutch (280) and the electric drive component (320) being received in the wet space (350).

2. Hybrid arrangement according to Claim 1, the transmission housing (170) having a dry space (360) which is delimited from the wet space (350) by way of a dividing wall (370).

3. Hybrid arrangement according to Claim 1 or 2, the superimposing transmission (220) being arranged in the flow of torque upstream of the separating clutch (280).

4. Hybrid arrangement according to one of the preceding claims which, furthermore, comprises a further torsional vibration damper (490) which is arranged in the flow of torque between the separating clutch (280) and the output side (130).

5. Hybrid arrangement according to one of Claims 1 to 4, the transmission (160) being an automated multi-step transmission.

6. Hybrid arrangement according to Claim 5, the automated multi-step transmission comprising at least one coupling element (175) which is configured in such a way that, by way of an actuation or a disconnection of the coupling element (175), a flow of torque through the automated multi-step transmission can be interrupted at least partially or completely.

7. Hybrid arrangement according to one of Claims 1 to 6 which, furthermore, comprises a control unit which is configured to move the separating clutch (280) into a closed state in the case of idling operation of an internal combustion engine (115) which is coupled to the input side (120), with the result that the flow of torque from the internal combustion engine (115) via the separating clutch (280) is not interrupted.

## Revendications

1. Agencement hybride pour une chaîne cinématique d'un véhicule automobile comprenant un moteur à combustion interne, contenant un module d'entraînement hybride (110) pour le transfert d'un couple d'un côté d'entrée (120) à un côté de sortie (130), le module d'entraînement hybride (110) comprenant :
un amortisseur d'oscillations de torsion (180), qui est accouplé au côté d'entrée (120) et qui fonctionne selon le principe de ramification de puissance, ce qui signifie que le couple reçu par le côté d'entrée (120) est transmis par le biais d'une première voie de transfert de couple (200) et d'une deuxième voie de transfert de couple (210) parallèle à la première voie de transfert de couple (200) à une transmission à superposition (220), l'amortisseur d'oscillations de torsion (180) dans la première voie de transfert de couple (200) comprenant un agencement de déphasage (230) pour générer un déphasage d'une inégalité de couple d'une première partie du couple transmise par le biais de la première voie de transfert de couple (200) par rapport à une inégalité de couple d'une deuxième partie du couple transmise par le biais de la deuxième voie de transfert de couple (210), et la transmission à superposition (220) étant réalisée de manière à superposer les parties du couple transmises par le biais des deux voies de transfert de couple et comprenant en outre un embrayage de séparation (280) qui est accouplé à l'amortisseur d'oscillations de torsion (180) et au côté de sortie (130) et qui est réalisé pour interrompre un flux de couple du côté de l'entrée (120) au côté de sortie (130) ;
le module d'entraînement hybride (110) étant accouplé par son côté de sortie (130) à un arbre d'entrée (150) d'une transmission (160) qui comprend un boîtier de transmission (170), et
le module d'entraînement hybride (110) comprend un composant d'entraînement électrique (320) disposé à l'intérieur du boîtier de transmission (170) avec un stator (340) et avec un rotor (330) qui est accouplé au côté de sortie (130) et qui est prévu pour introduire une composante de couple fournie par le composant d'entraînement électrique (320) dans le flux de couple derrière l'embrayage de séparation (280),
**caractérisé en ce que** le boîtier de transmission (170) comprend un espace humide (350), l'amortisseur d'oscillations de torsion (180), la transmission à superposition (220), l'embrayage de séparation (280) et le composant d'entraînement électrique (320) étant reçus dans l'espace humide (350).

2. Agencement hybride selon la revendication 1, dans lequel le boîtier de transmission (170) présente un espace sec (360) séparé de l'espace humide (350) par une paroi de séparation (370).

3. Agencement hybride selon la revendication 1 ou 2, dans lequel la transmission à superposition (220) est disposée dans le flux de couple avant l'embrayage de séparation (280).

4. Agencement hybride selon l'une quelconque des revendications précédentes, comprenant en outre un amortisseur d'oscillations de torsion supplémentaire (490) qui est disposé dans le flux de couple entre l'embrayage de séparation (280) et le côté de sortie (130).

5. Agencement hybride selon l'une quelconque des revendications 1 à 4, dans lequel la transmission (160) est une transmission étagée automatisée.

6. Agencement hybride selon la revendication 5, dans lequel la transmission étagée automatisée comprend au moins un élément d'accouplement (175) qui est réalisé de telle sorte qu'un flux de couple puisse être interrompu au moins en partie ou complètement par la transmission étagée automatisée par un actionnement ou un relâchement de l'élément d'accouplement (175).

7. Agencement hybride selon l'une quelconque des revendications 1 à 6, qui comprend en outre un appareil de commande qui est réalisé de manière à amener dans un état fermé l'embrayage de séparation (280) lors d'un fonctionnement en marche à vide d'un moteur à combustion (115) accouplé au côté d'entrée (120) de telle sorte que le flux de couple depuis le moteur à combustion (115) ne soit pas interrompu par le biais de l'embrayage de séparation (280).
